# EUROPÄISCHE PATENTSCHRIFT

(11) **EP 2 324 949 B1**
(45) Veröffentlichungstag und Bekanntmachung des Hinweises auf die Patenterteilung: **21.05.2014**
(21) Anmeldenummer: 10014778.4
(22) Anmeldetag: 19.11.2010
(51) Int. Cl.: B23K 26/06, B23K 26/36, B41C 1/05, G02B 27/09

(54) **Laservorrichtung zur Gravur von Druckwalzen**
Laser device for engraving print rollers
Dispositif laser pour la gravure de rouleaux d'impression

(30) Priorität: 19.11.2009 DE 102009053715
(43) Veröffentlichungstag der Anmeldung: 25.05.2011
(73) Patentinhaber: FEHA LaserTec Halle GmbH, 06112 Halle (DE)
(72) Erfinder: Pöhler, Manfred, Dr., 39240 Groß Rosenburg (DE); Staupendahl, Giesbert, Dr., 07751 Jena (DE); Osterburg, Lutz, 06198 Salzmünde (DE); Henze, Ekkehard-Torsten, 14532 Stahnsdorf (DE)
(74) Vertreter: Jungblut, Bernhard Jakob

(56) Entgegenhaltungen:
- EP-A1- 1 906 495
- EP-A2- 1 662 292
- DE-A1-102007 032 903
- US-A1- 2005 170 572
- US-A1- 2005 257 708
- US-A1- 2008 062 242

## Beschreibung

Die Erfindung betrifft eine Vorrichtung zur Bearbeitung von Festkörperoberflächen, insbesondere von Druckwalzenoberflächen, mit zumindest einer Laserstrahlungsquelle, insbesondere zumindest einer CO2-Laserstrahlungsquelle, und mit zumindest einem IR (Infrarot)-Strahlungsmodulator, insbesondere einem akustooptischen Modulator (AOM) und/oder einem akustooptischen Deflektor (AOD). Ein AOM moduliert die Intensität eines von einer Laserstrahlungsquelle emittierten Laserstrahls. Ein AOD verändert die Richtung der Beugung 1. Ordnung des Laserstrahls (siehe z.B., WO-A-2009/010244 und EP-A-1662292).

### Hintergrund der Erfindung und Stand der Technik

Die Bearbeitungsqualität von Druckwalzen wird von den Eigenschaften der verwendeten CO₂-Laser Strahlungsquelle hinsichtlich ihrer Strahlqualität (Strahlkennzahl K), der Wellenlängenstabilität, Polarisationsstabilität sowie Leistungs- und Richtungsstabilität bestimmt. Die Verwendung von AOM, die zur Steuerung der CO2-Laserstrahlung eingesetzt werden, brachte einen enormen Entwicklungssprung für die Druckindustrie im Bereich der Flexodrucktechnik, insbesondere bei der Verwendung von Druckwalzen aus elastomeren Werkstoffen. Die Begrenzung der Prozesseffektivität wird vor allem bei sehr großen Gravurtiefen durch die geringe Strahlungsbelastbarkeit der AOM bzw. AOD bestimmt.

Aus der Patentliteratur (EP-A-0754518) ist bekannt, dass diese Art von IR-Modulatoren bzw. Deflektoren, die typischerweise aus Germanium aufgebaut sind, nur technisch sinnvoll bis 100 W Strahlungsleistung belastbar sind. Da im Wellenlängenbereich der CO₂-Laserstrahlung bis heute kein vergleichbarer IR-Modulator aus anderem Material zur Verfügung steht, wurde sehr intensiv an der technischen Weiterentwicklung der AOM gearbeitet. Im Ergebnis dieser Entwicklung konnte eine Steigerung der cw-Strahlungsbelastbarkeit bis 500 W erreicht werden.

Dieser technische Fortschritt steigerte die Abtragsrate bei der Herstellung von Druckwalzen, beispielsweise für die Flexodrucktechnik, erheblich. Es zeigte sich jedoch, dass eine solch große Leistungssteigerung zu einem Verlust an Qualität bei der Herstellung von Druckwalzen führte.

Um diesen technischen Fortschritt der AOM sinnvoll verwerten zu können, wurde eine Mehrstrahlmethode entwickelt, bei der ein CO₂-Laser mit niedriger Strahlungsleistung verwendet wird, so dass gerade noch keine Qualitätsverluste bei der Gravur erkennbar sind und die weiteren CO₂-Laserstrahlen aus einer oder mehreren CO₂-Laserstrahlungsquellen zur Steigerung der Abtragrate, insbesondere zur Erzielung großer Gravurtiefen, eingesetzt werden. Mit der Reduzierung der Strahlungsleistung auf einem AOM wird einerseits die absolute Prozessgeschwindigkeit wieder reduziert und andererseits wird bei der Ausnutzung der Strahlungsbelastungsgrenzen der AOM bzw. AOD für die weiteren CO₂-Laserstrahlen die Laserstrahlqualität so schlecht, dass die Auflösung, i.e. die Anzahl der maximal möglichen Druckpunkte pro Zentimeter, sich stark verringert. Auch mit dieser Entwicklung bleibt die absolute Prozessgeschwindigkeit bei Erhalt höchster Prozessqualität durch die Strahlungsleistungsbegrenzung der AOM bzw. AOD bestimmt.

Die rasante und schnelle Entwicklung von Faserlasern höchster Strahlqualität mit Strahlungsleistungen bis in den Kilowatt-Bereich ermöglichte der Druckindustrie einen großen Fortschritt in der Herstellung von Druckwalzen aller Art. Auch der Einsatz dieser Laser für den Bereich der Flexodrucktechnik höchster Auflösung verbunden mit großen Gravurtiefen, in sogenannten Hybridmaschinen, wird angestrebt, dabei wird der Faserlaser an Stelle des CO₂-Laserstrahles eingesetzt, der für die Gewährleistung höchster Prozessqualität dimensioniert ist. Es ist aber bekannt, dass die gegenwärtige Anwendungsbreite der Flexodrucktechnik erst durch große Anstrengungen in der Entwicklung von Trägermaterialien erzielt wurde. Alle dabei entwickelten Materialien lassen sich besonders vorteilhaft mit der CO₂-Laserstrahlung bearbeiten. Der Grund dafür liegt in dem hohen Absorptionsvermögen dieser Materialien für die Wellenlänge des CO₂-Lasers. Mit der 10-mal kürzeren Wellenlänge des Faserlasers ist eine Bearbeitung dieser speziell entwickelten Materialien eingeschränkt. Bis heute wurde für den Einsatz von Faserlasern nur ein spezieller "schwarzer" Gummi entwickelt. Die mit dem Faserlaser in "schwarzem" Gummi erzeugten Qualitäten sind sehr gut, aber die Prozesseffektivität und die Gravurtiefe mit nur einem Faserlaser sind viel zu gering. Daher sind weitere Steigerungen der Prozesseffektivität in Verbindung mit großer Abtragtiefe nur bei gleichzeitiger Nutzung von CO2-Lasern erreichbar (Hybridtechnologie).

Der Nachteil solcher technischen Konzepte liegt in der Beschränkung der geringen anteiligen Nutzbarkeit des Faserlasers in einer Gravurmaschine, da mit diesem Laser nur Druckwalzen aus einer Materialart für den Bereich der Flexodrucktechnik zur Verfügung stehen. Weiterhin zeigt sich bei der Verwendung von leistungsstarken Faserlasern ein prinzipieller Nachteil dergestalt, dass nur etwa die Hälfte der Strahlungsleistung für den Abtragprozess wirksam ist, so dass die andere Hälfte im Material absorbiert wird und damit zu einer nachteiligen Erwärmung der Druckwalzenoberfläche führt. Diese Absorptionswirkung der Laserstrahlung des Faserlasers reduziert somit den Prozesswirkungsgrad und bestimmt damit die maximal mögliche verwendbare Strahlungsleistung, die gerade noch nutzbar ist.

### Technisches Problem der Erfindung

Der Erfindung liegt daher das technische Problem zu Grunde, die bisher erzielbaren hohen Strahlungsbelastungen modernster IR-Strahlungsmodulatoren so umzusetzen, dass die nahezu ideale Strahlqualität von Hochleistungs-CO₂-Laserstrahlungsquellen für den Prozess des schnellen Materialabtrages erhalten bleibt und somit höhere Prozessgeschwindigkeiten bei bestmöglicher Qualität umgesetzt werden können.

Der Erfindung liegt weiterhin das technische Problem zu Grunde, dass mit nur einer CO₂-Hochleistungslaserstrahlungsquelle höchster Strahlqualität im kW-Bereich (z.B. 1,5 kW) und unter Ausnutzung der Mehrstrahlmethode (z.B. 3 Strahlen) bis zur vollen einsetzbaren Strahlungsleistung der CO₂-Laserstrahlungsquelle die höchste Bearbeitungsqualität eines Materialabtragprozesses am effektivsten gewährleistet wird.

Die obengenannten Probleme werden durch eine Vorrichtung gemäß Anspruch 1 und durch einen Strahlformungsabsorber gemäß Anspruch 11 gelöst.

Grundzüge der Erfindung und bevorzugte Ausführungsformen.

Zur Lösung dieses technischen Problems lehrt die Erfindung, dass zwischen der Laserstrahlungsquelle und dem IR-Strahlungsmodulator ein Strahlformungsabsorber angeordnet ist, wobei der zentrale Teil eines Laserstrahlungsbündels (der Mittenbereich) von dem Strahlformungsabsorber zum IR-Strahlungsmodulator durchgelassen und ein Randbereich des Laserstrahlungsbündels von dem Strahlformungsabsorber vorzugsweise scharfkantig durch eine Reflexionsfläche abgetrennt und nach der Reflexion absorbiert wird, sowie die Gegenstände der Ansprüche.

Mit der Erfindung wird erreicht, dass die CO₂-Laserstrahlung eines idealen Laserstrahlbündels (gaußförmige Intensitätsverteilung) mit einem Strahldurchmesser 2W auf einem AOM oder AOD z.B. so abgebildet wird, dass vorzugsweise seine Strahltaille mit dem Durchmesser 2 Wo direkt auf dem Eingang des AOM bzw. AOD liegt. Durch diese Maßnahme erzielt man die theoretisch höchste Beugungseffektivität des AOM/AOD, das sind im Bereich von 40%, vorzugsweise 60%, insbesondere 80%, der eingestrahlten Laserstrahlungsleistung, bis zu maximal 90%. Die größtmögliche Strahldurchmesser 2 Wₘₐₓ wird von der nutzbaren Breite des durch die akustische welle erzeugten optischen Gitters im (Germanium-) Kristall bestimmt und somit die wirksame freie Öffnung des AOMs. Auf Grund der gaußförmigen Intensitätsverteilung einer idealen CO₂-Laserstrahlung wird der Strahldurchmesser 2 Wₘₐₓ auf dem AOM so gewählt, dass praktisch 100% der Strahlungsleistung gerade noch den Bereich der Breite des nutzbaren optischen Gitters durchdringen (um somit keine Störungen im Randbereich des optischen Gitters zu verursachen).

Diese Randbedingung legt die maximal mögliche Strahlungsbelastung fest, bei der gerade noch die ideale Strahlqualität nach dem AOM/AOD erhalten bleibt. Diese Grenze liegt weit unterhalb der maximal möglichen Strahlungsbelastungsgrenze moderner AOM/AOD.

Der Abstand zwischen Strahlformungsabsorber und AOM liegt vorzugsweise im Bereich von 1 mm und 1000 mm, vorzugsweise von 10 mm und 500 mm, beispielsweise von 10 mm bis 300mm. Vorteilhafterweise ist zwischen der Laserstrahlungsquelle und dem erfindungsgemäß eingesetzten Strahlformungsabsorber ein optisches Element (auch strahltransformierendes Element genannt), beispielsweise ein Teleskop, angeordnet. Das optische Element hat die Aufgabe, den bisher nutzbaren maximal zulässigen Strahldurchmesser 2 Wₘₐₓ auf dem AOM/AOD um einen Faktor x (x = 1,0 bis 3,0, insbesondere 1,5 bis 2,0) zu vergrößern. Dabei sollte angestrebt werden, dass der erzeugte vergrößerte Strahldurchmesser x * 2 * Wₘₐₓ bevorzugt als Strahltaille direkt auf dem AOM/AOD abgebildet wird, um die größte Beugungseffektivität zu erzielen. Durch diese Maßnahme wird die Strahlungsintensität im Zentrum des Laserstrahles stark reduziert, so dass nun die absolute Strahlungsleistung auf dem AOM/AOD erhöht werden kann.

Die nun im Randbereich des optischen Gitters störende Strahlungsleistung wird mit dem Strahlformungsabsorber von dem vergrößerten Laserstrahlungsbündel so abgetrennt, dass die Strahlqualität (Strahlkennzahl K) des für die Gravur nutzbaren Laserstrahlungsbündels im Fernfeld erhalten bleibt und der maximal größte Querschnitt des optischen Gitters wieder genutzt werden kann. Dies wird dadurch erreicht, dass man den erfindungsgemäß eingesetzten Strahlformungsabsorber unmittelbar vor dem AOM, also im Nahfeld positioniert, Nur in dieser Position kann die auf das AOM eingestrahlte CO₂-Laserleistung um bis zu 100% erhöht werden. Eine solche absolute Leistungssteigerung verändert nicht die Strahlqualität (K-Zahl) und somit ist diese erhöhte Strahlungsleistung nutzbar zur Erzielung bestmöglicher Gravurqualitäten.

Die strahlungsrelevanten Baugruppen und deren Anordnung zueinander, insbesondere die Ausbildung des Strahlformungsabsorbers sowie die Anordnung und Ausbildung des AOM/AOD sind dabei mit der Maßgabe gewählt, dass 10% bis 50%, vorzugsweise 10% bis 30%, insbesondere 15% bis 20%, der eingesetzten Strahlungsleistung der Laserstrahlungsquelle oder eines oder mehrerer Laserstrahlen im Randbereich vorzugsweise auf einer Linie gleicher Intensität scharfkantig abgetrennt und reflektiert werden. Dabei wird im Falle der Verwendung eines Teleskops und eines rotationssymmetrischen gaußförmigen Laserstrahlungsbündels eine nahezu kreisförmige Abtrennung der Strahlungsleistung vorgenommen. Werden mehrere Laserstrahlungsbündel in einer Anwendung benutzt, dann ist die Wahl der Linie gleicher Intensität und damit der Durchmesser der Eintrittsöffnung des Strahlformungsabsorbers anpassbar.

Der Strahlformungsabsorber ist beispielsweise, aber nicht zwingend, und z.B. bei Verwendung eines Teleskops vorzugsweise im wesentlichen rotationssymmetrisch und coaxial zur Laserstrahlausbreitungsrichtung ausgebildet, seine eine im Wesentlichen zur Laserstrahlausbreitungsrichtung nahezu orthogonale kreisförmige Eintrittsöffnung ist mit einem Durchmesser d_{E} von 2 Wₘₐₓ +/- 5 % eingerichtet, wobei eine zur Eintrittsöffnung koaxiale Austrittsöffnung mit einem Durchmesser d_{A} in einem axialen Abstand A vorgesehen ist, welcher größer als der Durchmesser d_{E} ist. Der Durchmesser d_{E} kann in Abstimmung mit dem Abstand A mit der Maßgabe gebildet sein, dass ein Öffnungswinkel alpha, definiert durch arctan [(d_{A}-d_{E})/2A] im Bereich von 0° bis 60°, vorzugsweise von 3° bis 30°, liegt. Um die Eintrittsöffnung des Strahlformungsabsorbers herum kann eine vorzugsweise rotationssymmetrische und zum Laserstrahl koaxiale Reflektionsfläche eingerichtet sein, wobei die Reflektionsfläche beispielsweise eine Kegelsturnpfrnantelfläche, die rotationssymmetrisch und koaxial zum Laserstrahlungsbündel angeordnet ist, wobei der Winkel der Reflexionsfläche zur Strahlausbreitungsrichtung zwischen 10° bis 60°, vorzugsweise von 30° und 50°, gewählt werden kann. Um die Reflektionsfläche kann ein vorzugsweise ringförmiges Absorptionselement, mit einem Wärmetauschelement, angeordnet sein, wodurch reflektierte Anteile des Laserstrahls absorbiert werden. Ein Strahlformungsabsorber dieses Aufbaus ist im Rahmen der Erfindung von selbstständiger Bedeutung und daher auch per se Gegenstand der vorliegenden Erfindung. Für die Eintrittsöffnung und/oder die Ausgangsöffnung sind aber auch andere Formen als die Kreisform, beispielsweise Polygone, Ellipsen, usw. möglich. Dies kann durch Transformation des Ausgangsbündels einer Laserstrahlungsquelle z.B. mit höchster Strahlqualität durch passive optische Bauelemente, wie z.B. Zylinderlinsen, erfolgen.

In der vorstehenden speziellen Ausführungsform wurde von einem rotationssymmetrischen Laserstrahlbündel mit gaußförmiger Intensitätverteilung ausgegangen. Weder die freie nutzbare Öffnung eines AOM/AOD noch der Querschnitt eines Laserstrahlbündels sind jedoch auf solche Geometrien beschränkt. So kann es aus verfahrenstechnischen Gründen vorteilhaft sein, dass rotationssymmetrische gaußförmige Laserstrahlbündel mittels geeigneter optischer Bauelemente, beispielsweise Zylinderlinsen, beispielsweise in einer Koordinate auseinanderzuziehen, so daß ein elliptischer oder ähnlicher Querschnitt entsteht, und dieses Bündel dem AOM/AOD zum Zwecke der Modulation oder Ablenkung zuzuführen. Da die freie Öffnung eines AOM/AOD vom physikalischen Wirkprinzip nicht auf Rotationssymmetrie festgelegt ist, kann diese dem modifizierten Bündelquerschnitt angepasst werden. Auf diese Weise ergibt sich eine weitere Möglichkeit, den beschriebenen. Strahlformungsabsorber an mögliche spezielle Erfordernisse eines Laserbearbeitungsprozesses optimal anzupassen.

Auch in diesem verallgemeinerten Fall bleibt jedoch das Grundproblem, welches durch die Erfindung gelöst wird, bestehen, nämlich die Einschränkung der Strahlungsbelastbarkeit eines AOM/AOD, wenn das gesamte Laserstrahlbündel einschließlich seiner für den Bearbeitungsprozess mehr oder weniger irrelevanten Randbereiche durch die freie Öffnung des AOM/AOD geschickt wird. Auch dieses verallgemeinerte Problem wird mit dem erfindungsgemäßen Einsatz eines Strahlformungsabsorbers gelöst. Dazu muss lediglich der beschriebene Strahlformungsabsorber in solcher Weise modifiziert werden, dass seine scharfkantige begrenzte Öffnung dem verallgemeinerten Bündelquerschnitt so angepasst wird, dass deren begrenzte Kontur typischerweise dem Verlauf einer Linie gleicher Intensität des verallgemeinerten Bündelquerschnitts entspricht und die zentralen Teile des Bündels dem AOM/AOD zugeführt werden, während die außerhalb dieser Linie gleicher Intensität liegenden Teile des Bündels heraus reflektiert und absorbiert werden. Auf diese Weise ist die Form der scharfkantig begrenzten Öffnung des Strahlformungsabsorbers definiert. Ihre Größe, also z.B. die Länge der beiden Hauptachsen bei einer elliptischen Öffnung, ergibt sich, analog dem rotationssymmetrischen Fall, wieder aus den Bedingungen, einerseits den AOM/AOD nicht mit Strahlungsanteilen zu belasten, die für die Bearbeitungsaufgabe irrelevant sind, andererseits die Strahlqualität des zur Bearbeitung genutzten Strahlbündels im Vergleich zum ursprünglichen Laserstrahlbündel nicht zu verschlechtern, so dass eine optimale Bearbeitung bei höchster Qualität gewährleistet wird. Diese Forderungen sind typischerweise durch Vernichtung bzw. Abtrennung von Randbereichen des ursprüngliche Laserstrahlbündels zu erfüllen, die vorzugsweise 3% bis 30% der Gesamtleistung dieses Bündels enthalten. Um auch für solche öffnungskonturen des Strahlformungsabsorbers keine Randbeeinflussung beim Durchgang des nutzbaren Laserbündels durch den Strahlformungsabsorbers zu erhalten, sind die Öffnungswinkel in den unterschiedliche Achsen entsprechend den zuvor beschriebenen Maßnahmen anzupassen.

Der Begriff "scharfkantig" im Rahmen des Strahlformungsabsorbers bezeichnet einen Kantenradius der Kante zwischen Reflektionsfläche und Innenfläche des Strahlformungsabsorbers im Bereich von 0,1 µ bis 1000 µm, vorzugsweise von 0,1 µm bis 100 µm, insbesondere von 0,1 µm bis 10 µm.

Eine erfindungsgemäße Vorrichtung kann im Rahmen einer Mehrstrahlmethode dadurch weitergebildet sein, dass zwischen der Laserstrahlungsquelle und dem optischen Element (beispielsweise Teleskop) ein Strahlteiler oder mehrere Strahlteiler angeordnet ist/sind, wobei jeder der geteilten Laserstrahlen jeweils optional einem optischen Element, einem Strahlformungsabsorber, und einem AOM zugeführt werden. Mit anderen Worten ausgedrückt, mittels einer einzigen Laserstrahlquelle kann eine Mehrzahl von Laserstrahlen erzeugt werden, wobei jeder Laserstrahl seinerseits jeweils die beschriebenen optischen Baugruppen durchläuft und so jeweils zur Bearbeitung einer Festkörperoberfläche genutzt werden kann. Dabei kann optional zwischen einem Strahlteiler und den weiteren optischen Baugruppen ein Strahlabschwächer vorgesehen sein.

Die Erfindung betrifft des Weiteren ein Verfahren zur Bearbeitung von Festkörperoberflächen, insbesondere zur Gravur von Druckwalzenoberflächen, wobei die durch die erfindungsgemäße Vorrichtung erzeugten Arbeitsstrahlen, i.e. Laserstrahlen der 1. Beugungsordnung der AOM, auf der Oberfläche des Festkörpers ggf. mittels üblicher optischer Elemente, wie Fokussierlinsen, abgebildet werden und der AOM/AOD nach Maßgabe eines auf der Festkörperoberfläche herzustellenden topographischen Musters mittels einer Steuervorrichtung angesteuert wird. Geeignete Druckwalzen bestehen typischerweise aus Gummi oder aus anderen speziellen flexiblen Materialien wie z.B. elastomeren Werkstoffen, beispielsweise EPDM, SBR oder NBR.

Die Erfindung soll nun an lediglich ein Ausführungsbeispiel darstellenden Figuren näher erläutert werden. Es zeigen:
- Fig. 1:: Einen schematischen Aufbau einer erfindungsgemäßen Vorrichtung,
- Fig. 2:: Einen erfindungsgemäßen Strahlformungsabsorber in Explosionsdarstellung mit 2 Komponenten,
- Fig. 3:: Den Gegenstand der Fig. 2 in zusammengefügtem Zustand und im Querschnitt, und
- Fig. 4:: Eine erfindungsgemäße Vorrichtung mit mehreren Laserstrahlen 1. Beugungsordnung zur gemeinsamen Bearbeitung einer Festkörperoberfläche.

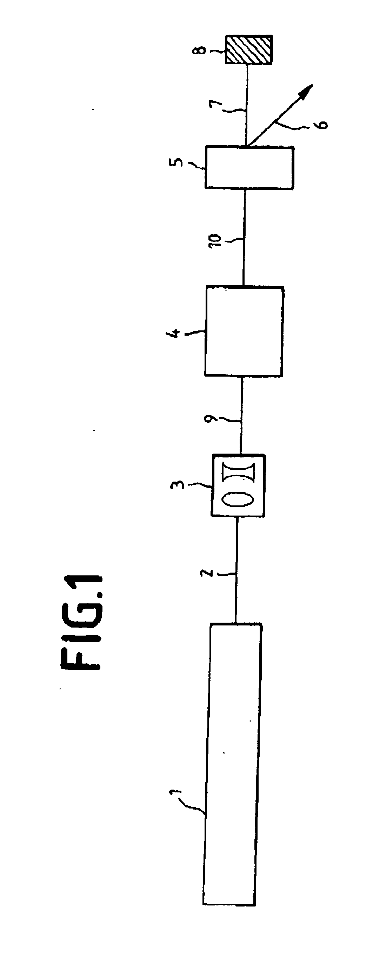

Die Figur 1 zeigt eine typische Anordnung zum schnellen Materialabtrag mittels eines CO₂-Lasers wie sie für eine Lasergravur von Druckwalzen vorzugsweise zur Anwendung kommt. In dieser Anordnung Figur 1 ist zusätzlich der erfindungsgemäße Strahlformungsabsorber (4) unmittelbar vor dem AOM (5) eingefügt. Der Laserstrahl (2) des CO₂-Lasers mit beispielsweise 600 W Strahlungsleistung höchster Strahlqualität (K > 0,85) und einer DC-Anregungstechnik zur Erzeugung einer amplitudengesteuerten Laserleistung in einem Leistungsbereich ab 5% der maximalen Leistung des CO₂-Lasers (1) wird mit Hilfe eines Teleskops (3) in ein Laserstrahlbündel (9) transformiert und wie im allgemeinen Teil der Beschreibung beschrieben über den Strahlformungsabsorber (4) auf der wirksamen freien Öffnung des AOM (5) abgebildet.

Der so geformte Laserstrahl (10) wird durch den aktiven AOM (5) in die erste Beugungsordnung abgelenkt und steht als Arbeitsstrahl (6) zur Verfügung, während der Beugungsstrahl 0. Ordnung (7) auf einem Absorber (8) vernichtet wird. Im abgeschalteten Zustand des AOM (5) gelangt der geformte Laserstrahl (10) direkt zu dem Absorber (8).

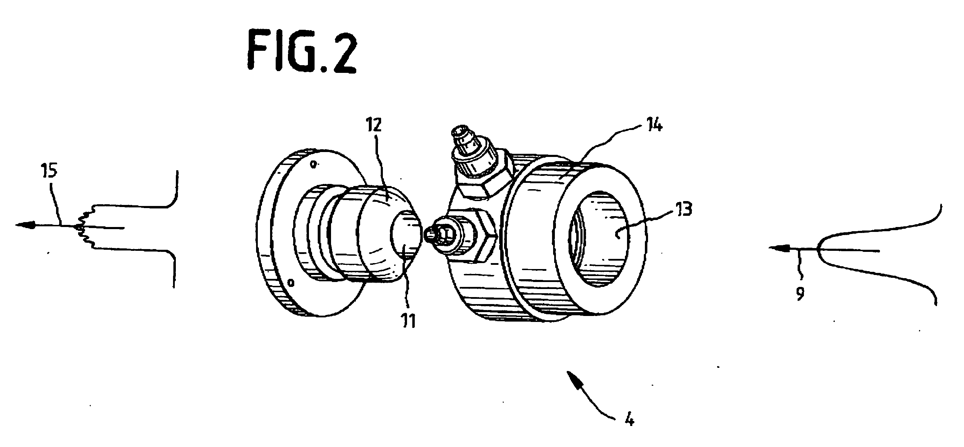

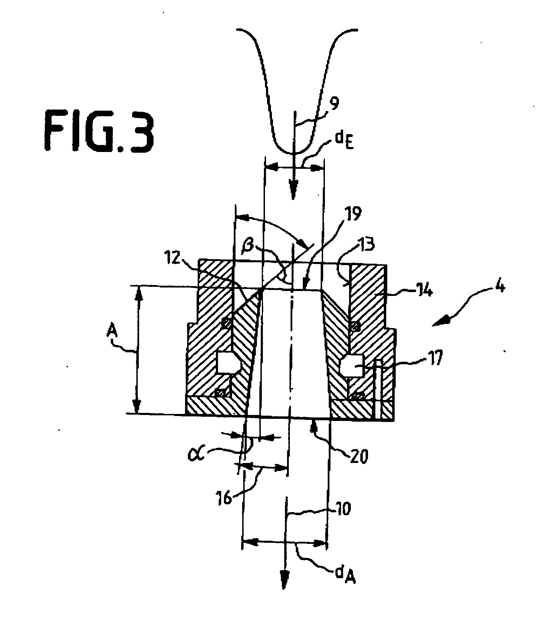

Die Figuren 2 und 3 veranschaulichen die Art der Ausführung des erfindungsgemäßen Strahlformungsabsorbers (4). Das nach dem Teleskop (3) in seiner Intensitätsverteilung gaußförmige Laserbündel (9) trifft zentrisch auf die scharfkantige, z.B. kreisförmige Eintrittsöffnung (11) des Strahlformungsabsorbers (4). Ein Teil des Laserstrahlbündels (9), beispielsweise 20% der Gesamtstrahlungsleistung des CO₂-Lasers (1), wird durch die Reflektionsfläche (12), hier eine hochreflektierende vorzugsweise metallische oder reflexionsbeschichtete und weiterhin vorzugsweise gut Wärme leitende Kegelstumpfmantelfläche (12), vom auftreffenden Laserstrahlbündel (9) scharfkantig abgetrennt und auf der Innenfläche (13) eines als wassergekühlter Absorptionszylinder (14) ausgebildeten Absorptionselementes (14) vollständig absorbiert.

Der durch die Eintrittsöffnung (11) hindurchtretende Anteil des Laserstrahlbündels (9) wird in seiner Intensitätsverteilung (15) so vorteilhaft verändert, dass dieser neu geformte Laserstrahl (10) in seiner absoluten Strahlungsleistung gegenüber der bisher möglichen Strahlungsleistung verdoppelt werden kann, ohne dass der Arbeitsstrahl (6) nach dem AOM (5) seine Strahlungsqualität (K-Zahl) verringert, wenn der Strahlformungsabsorber (4) unmittelbar vor dem AOM positioniert wird.

Zur Vermeidung von Wandeffekten des so erzeugten Laserstrahles (10) unmittelbar nach der Eintrittsöffnung (11) wird der Öffnungswinkel Alpha (16) ausreichend groß gewählt. Durch die kompakte Ausführungsart, die Art der verwendeten Materialien und die gezielte Wasserführung (17) ermöglicht der erfindungsgemäße Strahlformungsabsorber (4) Laserbündel mit Strahlungsleistungen bis in den Kilowatt-Bereich in ihrer Intensitätsverteilung ohne wesentlichen Strahlqualitätsverlust zu gestalten.

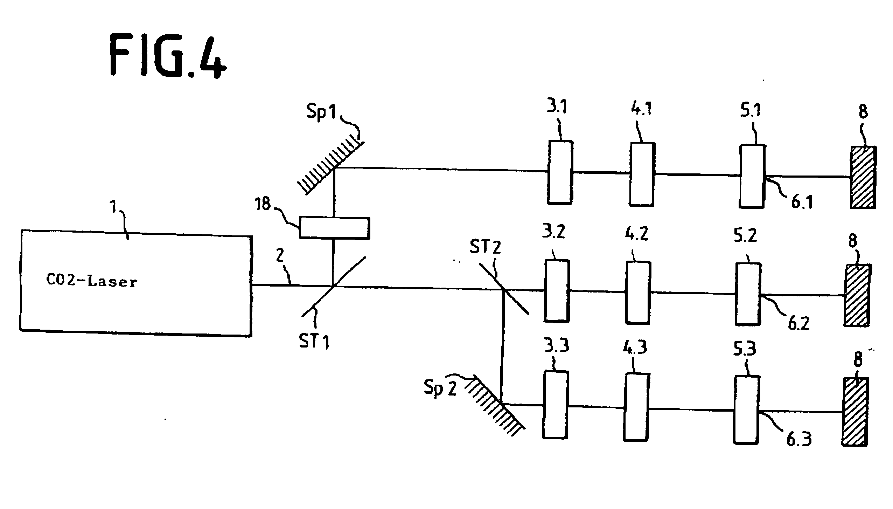

Die Figur 4 zeigt eine Anordnung, die mit nur einem einzigen DC angeregten Hochleitungs-CO₂-Laser (1) von mindestens 1 bis 2 kW Strahlungsleistung höchster Strahlqualität für die wirtschaftlichste Nutzung in einer Lasergravurmaschine für die Herstellung von Druckwalzen aus Gummi oder ähnlichen Materialien verwendet werden kann. Der DC-angeregte CO₂-Laserstrahl (2) wird mit Hilfe von zwei Strahlteilern ST1 und ST2 in drei Laserstrahlen geteilt, die ca. gleiche Leistungsanteile enthalten, Diese drei Teilstrahlen werden im Strahldurchmesser mit dem Teleskop (3.1, 3.2, 3.3) verändert und danach über die erfindungsgemäßen Strahlformungsabsorber (4.1, 4.2 und 4.3) auf ihre zugeordneten AOM (5.1, 5.2 und 5.3) abgebildet.

Die so geformten Arbeitsstrahlen (6.1, 6.2 und 6.3) können in ihrer Strahlungsleistung durch die Anpassung der Größe des Durchmessers des Eintrittsöffnung (11) der Strahlformungsabsorber (4.1, 4.2, 4.3) durch die Verwendung der Leistungssteuerung des DC angeregten Hochleitungs-CO₂-Lasers nach Bedarf an die geforderte Bearbeitungsqualität bei garantierter maximaler Prozesseffektivität und bestmöglicher Wirtschaftlichkeit angepasst werden.

Durch den zusätzlichen Einsatz eines definierten Strahlabschwächers (18) nach dem Strahlteiler (ST1) kann z.B. der Arbeitsstrahl (6.1) exakt bei maximaler Leistungsobergrenze für die Strahlungsbelastung der AOM (5.2 und 5.3) in seiner Strahlungsbelastung so eingestellt werden, dass mit diesem Arbeitsstrahl (6,1) die größtmögliche Strahlqualität für die Gravur zur Verfügung steht und die beiden anderen Arbeitsstrahlen (6.2 und 6.3) an der maximal zulässigen Belastungsgrenze arbeitenden AOM (5.2 und 5.3) für die Gravurtiefe verwendet werden.

## Patentansprüche

1. Laser-Materialbearbeitungsvorrichtung zur Bearbeitung von Festkörperoberflächen, insbesondere zum Gravieren von Druckwalzen mit Belägen aus einem elastomeren Werkstoff, beispielsweise Gummi,
mit zumindest einer einen Laserstrahl (2) emittierenden Laserstrahlungsquelle (1), insbesondere einer CO₂-Laserstrahlungsquelle, welche eine Strahlkennzahl K von 0,75 bis 1,0, insbesondere 0,8 bis 1,0 und einen größtmöglichen Strahldurchmesser 2 Wₘₐₓ aufweist,
mit zumindest einem IR-Strahlungsmodulator (IRM) (5),
wobei 90 bis 100%, insbesondere 95 bis 100%, der Strahlungsleistung des auf dem IRM (5) eingestrahlten Laserstrahles durch den IRM (5) moduliert und/oder deflektiert werden,
mit zwischen der Laserstrahlungsquelle (1) und dem IRM (5) angeordneten strahltransformenden Elementen (3), insbesondere einem Teleskop (3), wobei mittels der strahltransformenden Elemente (3) der größtmögliche Strahldurchmesser 2 * Wₘₐₓ um einen Faktor x ≥ 1,0 vergrößert wird,
mit zwischen den strahltransformenden Elementen (3) und dem IRM (5) ein Strahlformungsabsorber (4) angeordnet ist,
wobei ein Mittenbereich des Laserstrahlungsbündels (9), dessen Form und Größe etwa der nutzbaren Öffnung des IRM (5) entsprechen, vom Strahlformungsabsorber (4) zum IRM (5) durchgelassen und die außerhalb des Mittenbereiches liegenden Randbereiche des Laserstrahlungsbündels (9) mittels einer Reflexionsfläche vom Mittenbereich abgetrennt und absorbiert werden.

2. Vorrichtung nach Anspruch 1, wobei die strahltransformenden Elemente (3) den Laserstrahldurchmesser 2 Wₘₐₓ um einen Faktor x vergrößern, wobei x im Bereich von 1,0 bis 3,0, insbesondere 1,5 bis 2,0 liegt.

3. Vorrichtung nach einem der Ansprüche 1 oder 2, wobei der Abstand zwischen dem Strahlformungsabsorber (4) und dem IRM (5) im Bereich von 1 mm bis 1000 mm, insbesondere 10 mm bis 500 mm, liegt.

4. Vorrichtung nach einem der Ansprüche 1 bis 3, wobei der Strahlformungsabsorber (4) vorzugsweise im wesentlichen rotationssymmetrisch und koaxial zur Laserstrahlausbreitungsrichtung ausgebildet ist, dass eine vorzugsweise im Wesentlichen kreisförmige Eintrittsöffnung (19) mit einem Durchmesser d_{E} von 2 Wₘₐₓ +/- 5 % eingerichtet ist, dass eine zur Eintrittsöffnung (19) koaxiale Austrittsöffnung (20) mit einem Durchmesser d_{A} in einem axialen Abstand A vorgesehen ist, welcher größer als der Durchmesser d_{E} ist.

5. Vorrichtung nach Anspruch 4, wobei der Durchmesser d_{A} in Abstimmung mit dem Abstand A mit der Maßgabe gebildet ist, dass ein Öffnungswinkel alpha, definiert durch arctan [(d_{A}-d_{E})/2A] im Bereich von 0° bis 60°, vorzugsweise von 3° bis 30°, liegt.

6. Vorrichtung nach einem der Ansprüche 4 oder 5, wobei um die Eintrittsöffnung (19) des Strahlformungsabsorbers (4) herum eine vorzugsweise rotationssymmetrische und zur Laserstrahlausbreitungsrichtung vorzugsweise koaxiale Reflektionsfläche (12) eingerichtet ist, wobei die Reflektionsfläche (12) zur Laserstrahlausbreitungsrichtung in einem Winkel zwischen 10° und 60°, vorzugsweise 30° bis 50°, gewählt ist.

7. Vorrichtung nach einem der Ansprüche 4 bis 6, wobei eine scharfkantige kreisförmige Eintrittsöffnung (19) des Strahlformungsabsorbers (4) in etwa der Kontur einer Linie gleicher Intensität des Laserstrahlungsbündels (9) entspricht.

8. Vorrichtung nach einem der Ansprüche 1, 6 oder 7, wobei eine mit den strahltransformenden Elementen (3) gebildete Intensitätsverteilung des Laserstrahlungsbündels (2) von der Kreisform abweichend gestaltet ist und die Kontur der scharfkantigen Öffnung des Strahlformungsabsorbers (4) eine Linie gleicher Intensität bildet, die 70 % bis 97 % der Laserstrahlungsleistung durchlässt und diesen so generierten Laserstrahl (10) auf dem IRM (5) abbildet, während eine rotationssymmetrische, in Strahlausbreitungsrichtung angeordnete Reflexionsfläche (12) einen Strahlungsanteil von 3 % bis 30 % abtrennt.

9. Vorrichtung nach einem der Ansprüche 1 bis 8, wobei um Reflexionsflächen (12) koaxial ein Absorptionselement (14), vorzugsweise mit einem Wärmetauscher, beispielsweise einer Wasserkühlung (17), angeordnet ist, wodurch die reflektierenden Anteile des Laserstrahlungsbündels (9) absorbiert werden.

10. Vorrichtung nach einem der Ansprüche 1 bis 9, wobei zwischen einer im Leistungsbereich von 5 % bis 100 % einstellbaren DC-angeregten CO₂-Laserstrahlungsquelle (1) und dem strahltransformenden Element (3.1) ein Strahlteiler (ST1) und zumindest ein weiterer Strahlteiler (ST2) so angeordnet ist, dass auch zwischen allen Teilstrahlen vor dem strahltransformenden Element (3.1, 3.2, 3.3) wahlweise ein Strahlabschwächer (18) angeordnet ist.

11. Strahlformungsabsorber (4) zur Verwendung in einer Vorrichtung nach einem der Ansprüche 1 bis 8, welcher rotationssymmetrisch und koaxial zum Laserstrahlausbreitungsrichtung ausgebildet ist, wobei eine kreisförmige Eintrittsöffnung (19) mit einem Durchmesser d_{E} von 2 Wₘₐₓ +/- 5 % eingerichtet ist, wobei eine zur Eintrittsöffnung (19) koaxiale Austrittsöffnung (20) mit einem Durchmesser d_{A} in einem axialen Abstand A vorgesehen ist, welcher größer als der Durchmesser d_{E} ist, wobei um die Eintrittsöffnung (19) herum eine rotationssymmetrische und zum Laserstrahl koaxiale Reflektionsfläche (12) eingerichtet ist, wobei die Reflektionsfläche (12) zur Strahlausbreitungsrichtung in einem Winkel von 10° bis 60° steht und wobei um die Reflektionsfläche (12) ein Absorptionselement (14) angeordnet ist, zur Absorption der reflektierten Anteile des Laserstrahls.

12. Verfahren zur Laserbearbeitung einer Festkörperoberfläche, insbesondere zur Gravur einer Druckwalzenoberfläche, wobei mittels einer Vorrichtung nach einem der Ansprüche 1 bis 10 erzeugter Arbeitsstrahl (6.1, 6.2, 6.3) auf der Festkörperoberfläche abgebildet und der IRM (5) nach Maßgabe eines auf der Festkörperoberfläche herzustellenden topographischen Musters mittels einer Steuervorrichtung angesteuert wird und die Strahlungsleistung der Laserstrahlungsquelle (1) vorzugsweise an die Qualität und die höchste Produktivität der jeweiligen Aufgabe angepasst wird.

## Claims

1. A laser material processing device for processing solid surfaces, in particular for engraving printing cylinders with linings of an elastomeric material, for example rubber,
comprising at least one laser radiation source (1) emitting a laser beam (2), in particular a CO₂ laser radiation source, which has a beam quality factor K of 0.75 to 1.0, in particular 0.8 to 1.0 and a largest possible beam diameter of 2 Wₘₐₓ,
comprising at least one IR radiation modulator (IRM) (5),
wherein 90 to 100%, in particular 95 to 100%, of the radiation power of the laser beam irradiated on the IRM (5) are modulated and/or deflected by the IRM (5),
comprising beam-transforming elements (3) disposed between the laser radiation source (1) and the IRM (5), in particular a telescope (3), wherein by means of the beam-transforming elements (3) the largest possible beam diameter 2 Wₘₐₓ is increased by a factor x ≥ 1.0,
comprising a beam-forming absorber (4) disposed between the beam-transforming elements (3) and the IRM (5),
wherein a central portion of the laser beam (9), the shape and size of which approximately correspond to the usable opening of the IRM (5), is transmitted by the beam-forming absorber (4) to the IRM (5) and the outer portions of the laser beam (9) outside of the central portion are separated from the central portion by means of a reflecting surface and are absorbed.

2. The device according to claim 1, wherein the beam-transforming elements (3) enlarge the laser beam diameter 2 Wₘₐₓ by a factor x, wherein x is in the range from 1.0 to 3.0, in particular 1.5 to 2.0.

3. The device according to one of claims 1 or 2, wherein the distance between the beam-forming absorber (4) and the IRM (5) is in the range from 1 mm to 1,000 mm, in particular 10 mm to 500 mm.

4. The device according to one of claims 1 to 3, wherein the beam-forming absorber (4) preferably is substantially rotationally symmetric and coaxial with the direction of propagation of the laser beam, wherein a preferably substantially circular entry opening (19) having a diameter d_{E} of 2 Wₘₐₓ +/- 5% is provided, wherein an exit opening (20) being coaxial with the entry opening (19) and having a diameter d_{A} is provided in an axial distance A, d_{A} being larger than the diameter d_{E}.

5. The device according to claim 4, wherein the diameter d_{A} is formed conforming with the distance A such that an opening angle alpha, as defined by arctan [(d_{A}-d_{E})/2A] is in the range from 0° to 60°, preferably from 3° to 30°.

6. The device according to one of claims 4 or 5, wherein around the entry opening (19) of the beam-forming absorber (4), a reflecting surface (12) being preferably rotationally symmetric and preferably coaxial with the direction of propagation of the laser beam is provided, wherein the reflecting surface (12) is oriented with respect to the direction of propagation of the laser beam at an angle between 10° and 60°, preferably 30° and 50°.

7. The device according to one of claims 4 to 6, wherein a sharp-edged circular entry opening (19) of the beam-forming absorber (4) approximately corresponds to the contour of a line of identical intensity of the laser beam (9).

8. The device according to one of claims 1, 6 or 7, wherein an intensity distribution of the laser beam (2) formed with the beam-transforming elements (3) has a shape differing from the circular shape, and the contour of the sharp-edged opening of the beam-forming absorber (4) forms a line of identical intensity, which transmits 70% to 97% of the laser radiation power and projects the laser beam (10) generated in this way on the IRM (5), whereas a rotationally symmetric reflecting surface (12) disposed in the direction of radiation propagation separates a radiation portion of 3% to 30%.

9. The device according to one of claims 1 to 8, wherein an absorption element (14), preferably comprising a heat exchanger, for instance a water cooling system (17), is coaxially disposed around the reflecting surfaces (12), thereby the reflecting portions of the laser beam (9) being absorbed.

10. The device according to one of claims 1 to 9, wherein between a DC-excited CO₂ laser radiation source (1) being adjustable in the power range from 5% to 100% and the beam-transforming element (3.1), a beam splitter (ST1) and at least one additional beam splitter (ST2) are arranged such that optionally a beam attenuator (18) is also disposed between all partial beams before the beam-transforming element (3.1, 3.2, 3.3).

11. A beam-forming absorber (4) for use in a device according to one of claims 1 to 8, which is substantially rotationally symmetric and coaxial with respect to the direction of propagation of the laser beam, wherein a circular entry opening (19) having a diameter d_{E} of 2 Wₘₐₓ +/- 5% is provided, wherein an exit opening (20) being coaxial with the entry opening (19) and having a diameter d_{A} is provided in an axial distance A, d_{A} being larger than the diameter d_{E}, wherein around the entry opening (19), a reflecting surface (12) being rotationally symmetric and coaxial with the laser beam is provided, wherein the reflecting surface (12) is oriented with respect to the direction of propagation of the beam at an angle between 10° and 60°, and wherein an absorption element (14) is disposed around the reflecting surfaces (12) for absorbing the reflecting portions of the laser beam.

12. A method for laser processing a solid surface, in particular for engraving a printing cylinder surface, wherein by means of a device according to one of claims 1 to 10 a generated working beam (6.1, 6.2, 6.3) is projected on the solid surface and the IRM (5) is controlled by means of a control device according to a typographic pattern to be generated on the solid surface and the radiation power of the laser radiation source (1) is preferably adjusted to the quality and the highest productivity of the respective task.

## Revendications

1. Dispositif d'usinage au laser des matériaux pour l'usinage de surfaces solides, en particulier destiné à graver des rouleaux d'impression avec des garnitures en élastomère, par exemple caoutchouc,
comprenant au moins une source de rayonnement laser (1) émettant un faisceau laser (2), en particulier une source de rayonnement laser au CO₂, qui a un facteur de qualité du faisceau K de 0,75 à 1,0, en particulier 0,8 à 1,0 et un diamètre du faisceau le plus grand possible de 2 Wₘₐₓ,
comprenant au moins un modulateur de rayonnement IR (IRM) (5),
dans lequel 90 à 100%, en particulier 95 à 100%, de la puissance du rayonnement du faisceau laser irradiée sur l'IRM (5) sont modulés et/ou déviés par l'IRM (5),
comprenant des éléments de transformation du faisceau (3) disposés entre la source de rayonnement laser (1) et l'IRM (5), en particulier un télescope (3), dans lequel au moyen des éléments de transformation du faisceau (3) le diamètre du faisceau le plus grand possible 2 Wₘₐₓ est agrandi par un facteur x ≥ 1,0,
comprenant un absorbeur de formation du faisceau (4) disposé entre les éléments de transformation du faisceau (3) et l'IRM (5),
dans lequel une partie centrale du faisceau laser (9), la forme et la taille de laquelle environ correspondent à l'ouverture utilisable de l'IRM (5), est transmise par l'absorbeur de formation du faisceau (4) à l'IRM (5) et les parties de bord du faisceau laser (9) à l'extérieur de la partie centrale sont séparées de la partie centrale au moyen d'une surface réfléchissante et sont absorbées.

2. Dispositif selon la revendication 1, dans lequel les éléments de transformation du faisceau (3) agrandissent le diamètre du faisceau laser 2 Wₘₐₓ par un facteur x, dans lequel x est compris dans la gamme entre 1,0 et 3.0, en particulier 1,5 et 2,0.

3. Dispositif selon une des revendications 1 ou 2, dans lequel la distance entre l'absorbeur de formation du faisceau (4) et l'IRM (5) est comprise dans la gamme entre 1 mm et 1000 mm, en particulier 10 mm et 500 mm.

4. Dispositif selon une des revendications 1 à 3, dans lequel l'absorbeur de formation du faisceau (4) de préférence est essentiellement symétrique en rotation et coaxial par rapport à la direction de propagation du faisceau laser, dans lequel une ouverture d'entrée (19) de préférence essentiellement circulaire ayant un diamètre d_{E} de 2 Wₘₐₓ +/- 5% est prévue, dans lequel une ouverture de sortie (20) étant coaxiale par rapport à l'ouverture d'entrée (19) et ayant un diamètre d_{A} est prévue dans une distance axiale A, d_{A} étant supérieur au diamètre d_{E}.

5. Dispositif selon la revendication 4, dans lequel le diamètre d_{A} est réalisé conformément avec la distance A de façon qu'un angle d'ouverture alpha, comme défini par arctan [(d_{A}-d_{E})/2A], soit compris dans la gamme entre 0° et 60°, de préférence entre 3° et 30°.

6. Dispositif selon une des revendications 4 ou 5, dans lequel autour de l'ouverture d'entrée (19) de l'absorbeur de formation du faisceau (4), une surface réfléchissante (12) étant de préférence symétrique en rotation et de préférence coaxiale par rapport à la direction de propagation du faisceau laser est prévue, la surface réfléchissante (12) étant orientée par rapport à la direction de propagation du faisceau laser à un angle entre 10° et 60°, de préférence 30° et 50°.

7. Dispositif selon une des revendications 4 à 6, dans lequel une ouverture d'entrée (19) circulaire à arête vive de l'absorbeur de formation du faisceau (4) environ correspond au contour d'une ligne à intensité identique du faisceau laser (9).

8. Dispositif selon une des revendications 1, 6 ou 7, dans lequel une distribution d'intensité du faisceau laser (2) réalisée avec les éléments de transformation du faisceau (3) a une forme différente de la forme circulaire, et le contour de l'ouverture à arête vive de l'absorbeur de formation du faisceau (4) forme une ligne à intensité identique, qui transmet 70% à 97% de la puissance du rayonnement laser et projette le faisceau laser (10) généré de cette façon sur l'IRM (5), tandis qu'une surface réfléchissante (12) symétrique en rotation disposée dans la direction de propagation du faisceau sépare une partie de rayonnement de 3% à 30%.

9. Dispositif selon une des revendications 1 à 8, dans lequel un élément d'absorption (14), de préférence comprenant un échangeur de chaleur, par exemple un système de refroidissement en eau (17), est coaxialement disposé autour des surfaces réfléchissantes (12), donc les parties réfléchissantes du faisceau laser (9) étant absorbées.

10. Dispositif selon une des revendications 1 à 9, dans lequel entre une source de rayonnement laser au CO₂ (1) excitée par cc et étant réglable dans la gamme de puissance entre 5% et 100% et l'élément de transformation du faisceau (3.1), un séparateur de faisceau (ST1) et au moins un séparateur de faisceau (ST2) additionnel sont arrangés de façon qu'optionnellement un atténuateur de faisceau (18) soit aussi disposé entre tous les faisceaux partiels devant l'élément de transformation du faisceau (3.1, 3.2, 3.3).

11. Absorbeur de transformation du faisceau (4), en particulier pour l'utilisation dans un dispositif selon une des revendications 1 à 8, qui est essentiellement symétrique en rotation et coaxial par rapport à la direction de propagation du faisceau laser, dans lequel une ouverture d'entrée (19) circulaire ayant un diamètre d_{E} de 2 Wₘₐₓ +/- 5% est prévue, dans lequel une ouverture de sortie (20) étant coaxiale par rapport à l'ouverture d'entrée (19) et ayant un diamètre d_{A} est prévue dans une distance axiale A, d_{A} étant supérieur au diamètre d_{E}, dans lequel autour de l'ouverture d'entrée (19), une surface réfléchissante (12) étant symétrique en rotation et coaxiale par rapport au faisceau laser est prévue, dans lequel la surface réfléchissante (12) est orientée par rapport à la direction de propagation du faisceau à un angle entre 10° et 60°, et dans lequel un élément d'absorption (14) est disposé autour des surfaces réfléchissantes (12) pour absorber les parties réfléchissantes du faisceau laser.

12. Procédé d'usinage au laser d'une surface solide, en particulier destiné à graver une surface d'un rouleau d'impression, dans lequel au moyen d'un dispositif selon une des revendications 1 à 10, un faisceau actif généré (6.1, 6.2, 6.3) est projeté sur la surface solide et l'IRM (5) est commandé au moyen d'un dispositif de commande selon un motif typographique à être généré sur la surface solide et la puissance du rayonnement de la source de rayonnement laser (1) est de préférence ajustée à la qualité et la productivité la plus haute de la tâche respective.
